# EUROPEAN PATENT APPLICATION

(11) **EP 2 189 886 A2**
(43) Date of publication of application: **26.05.2010**
(21) Application number: 09155403.0
(22) Date of filing: 17.03.2009
(51) Int. Cl.: G06F 3/048, G06F 3/033, G06F 3/038

(54) **A method and apparatus to define drafting position**

(30) Priority: 10.11.2008 TW 97143423
(71) Applicant: AVerMedia Information, Inc., Chung-Ho City, Taipei Hsien (TW)
(72) Inventor: Sun, Shi-Mu, Taipei Hsien (TW); Yen, Christopher, Taipei Hsien (TW); Yang, Shu-Ya, Taipei Hsien (TW); Lee, Tzung-Lin, Taipei Hsien (TW); Kuo, Mei-Jen, Taipei Hsien (TW)
(74) Representative: Lang, Christian

(57) **Abstract**

The present invention discloses a method to define a drafting range based on a curve with a plurality of points drawn by a user. A writing character is shown in a display based on the drafting range. The method includes the following steps. The first step is to gather coordinate positions of points. Then, these coordinate positions are compared to each other to get a maximum coordinate position and a minimum coordinate position. A drafting range is generated based on the maximum coordinate position and the minimum coordinate position. Next, the drafting range is corresponded to a display range of a display to define a ratio of the drafting range to the display range. Finally, the writing character is adjusted and displays in the display based on the ratio.

## Description

### Related applications

This application claims priority to Taiwan Application Serial Number 97143423, filed November 10, 2008, which is herein incorporated by reference.

### Field of the Invention

The present invention relates to a method and apparatus to define range, and especially to a method and apparatus to define drafting range.

### Background of the Invention

Mouse and keyboard are standard input equipments for computer; however, there are much difference among mouse, keyboard and pen in writing and drawing. Therefore, it is necessary for a novice to spend much time to study how to control mouse and keyboard and to remember the positions of the basic character in keyboard. Therefore, a pen mouse is developed for resolving the foregoing problems.

When a user uses the pen mouse to draw, the pen mouse can transfer the move distance to the computer timely. The computer can calculate the move distance to decide and show a corresponding position on a display to notify the user.

In other words, such input method requires the user to keep a close watch on the display to insure that the display position in the display is correct. It is very inconvenient for a user. Moreover, if the sensitivity of the pen mouse is not good, the range of the writing content shown in the display will be different from what the user wants.

Therefore, an apparatus and a method that can resolve the foregoing problems are needed.

### Summary of the Invention

Therefore, the present invention provides an apparatus and a method to define a drafting range. And, based on the drafting range, a ratio of the writing character to display character is automatically set. Then, based on the ratio, the writing character is displayed in the display.

In accordance with the foregoing purpose, the present invention discloses a method to define a drafting range based on a curve drew by a user and a writing character is shown in a display based on the drafting range. The curve includes a plurality of points. The method includes the following steps. The first step is to gather coordinate positions of points. Then, these coordinate positions are compared to each other to get a maximum coordinate position and a minimum coordinate position. A drafting range is generated based on the maximum coordinate position and the minimum coordinate position. Next, the drafting range is corresponded to a display range of a display to define a ratio of the drafting range to the display range. Finally, the writing character is adjusted and displays in the display based on the ratio.

In another embodiment, a pen mouse is used to draw the curve. The position of the pen mouse starting to draft is sensed. Then, the distance between the minimum coordinate position and the position of the pen mouse starting to draft is determined. Finally, the distance is adjusted based on the ratio to show the writing character in the display.

Moreover, the present invention discloses an apparatus to define a drafting range based on a curve drawn by a user and a writing character is shown in a display based on the drafting range. The curve includes a plurality of points. The apparatus includes a gathering module to gather coordinate positions of points, a comparing module to compare these coordinate positions to each other to get a maximum coordinate position and a minimum coordinate position, a generating module to generate a drafting range based on the maximum coordinate position and the minimum coordinate position, a calculating module to correspond the drafting range to a display range of a display to define a ratio of the drafting range to the display range and a display module to adjust the writing character and display the adjusted writing character in the display based on the ratio.

Accordingly, the drafting range is corresponded to the display range, then, the writing character is adjusted and displays in a display based on a ratio of the drafting range to the display range. Therefore, an exact drafting range and position can be displayed in the display.

### Brief Description of the Drawings

The foregoing aspects and many of the attendant advantages of this invention will become more readily appreciated as the same becomes better understood by reference to the following detailed description, when taken in conjunction with the accompanying drawings, wherein:
Figure 1 is a flow chart to define a drafting range and a drafting position according to the present invention.
Figure 2A to figure 2D is the drafting range drawn by users.
Figure 3 is a flow chart of detailed steps of comparing the drafting positions.
Figure 4 is a diagram showing the correspondence of the drafting range with a display range of a display to define a ratio.
Figure 5 is a flow chart of applying the method in a Document Camera.
Figure 6 is a schematic diagram of using a pen mouse to define the drafting range.
Figure 7 is a schematic diagram of display content of figure 6 in a display.
Figure 8 shows an apparatus to define a drafting range and a drafting position according to the present invention.

### Detailed Description of the Preferred Embodiment

Using pen mouse to input information requires the user to keep a close watch on the display to insure that the display position in the display is correct. It is very inconvenient for a user. Moreover, if the sensitivity of the pen mouse is not good, the position of the content shown in the display will be different from what the user wants. Therefore, the present invention provides an apparatus and method to define drafting range and position that can adjust and display the writing character in a display based on a ratio of the drafting range to the display range. The method calculates the relationship between points that a user draws to define the drafting range and to calculate a ratio of the drafting range to the display range of the display. Then, the writing character is displayed in the display based on the ratio.

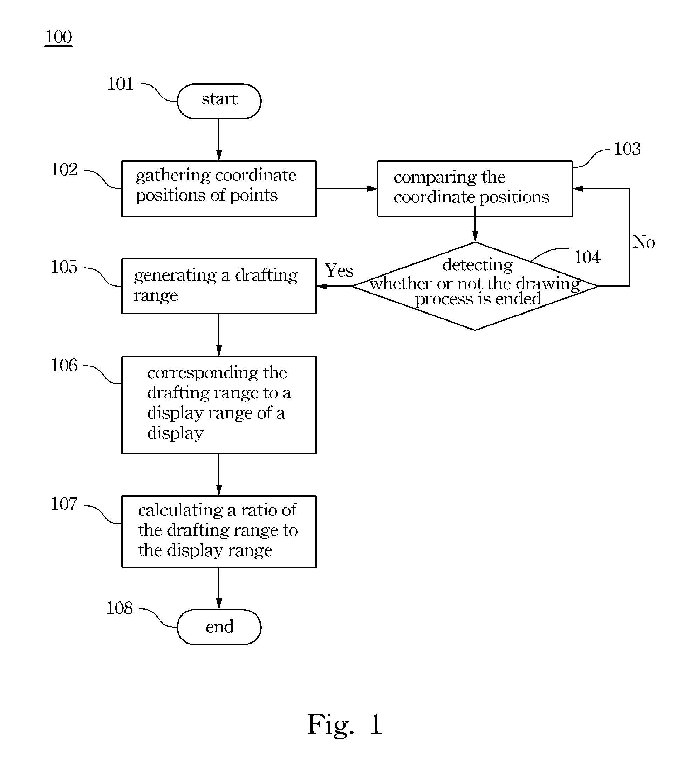

Figure 1 is a flow chart to define a drafting range and a drafting position according to the present invention. In step 101, a flow 100 is started to define the drafting range and the drafting position.

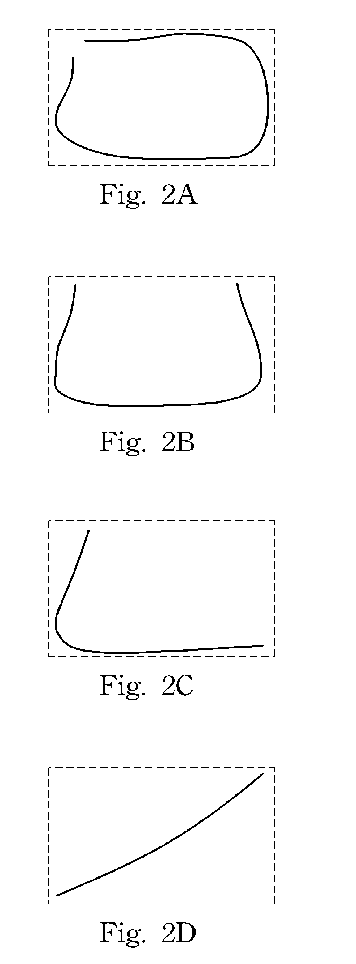

In step 102, coordinate positions of points that a user draws to define a drafting range are gathered. In an embodiment, a user can use a pen mouse to draw a range that the user wants to draft. A curve can be drawn by the user to define the range as shown in the figure 2A to 2D.

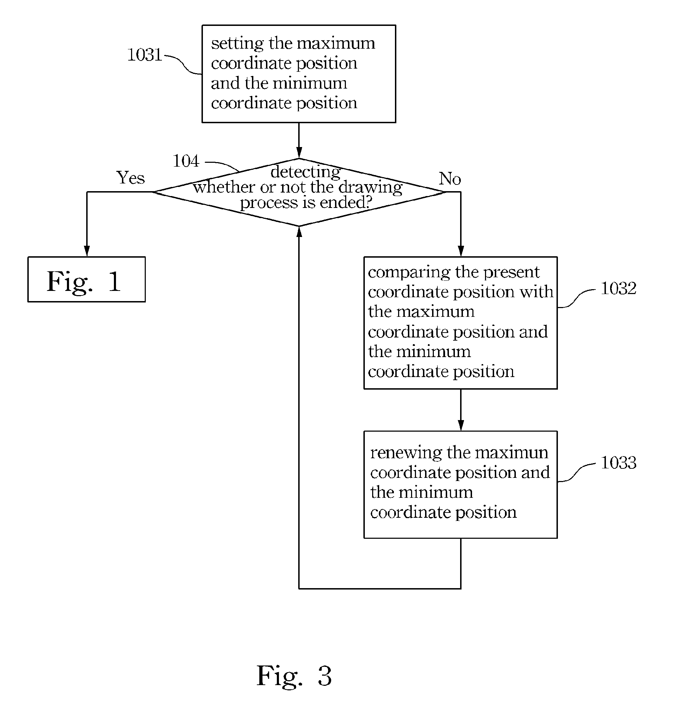

In step 103, these coordinate positions are compared to each other to get a maximum coordinate position and a minimum coordinate position. The minimum coordinate position means that the position has a minimum X-direction coordinate value and a minimum Y-direction coordinate value, (minX, minY). The maximum coordinate position means that the position has a maximum X-direction coordinate value and a maximum Y-direction coordinate value, (max X, max Y). Figure 3 illustrates a detailed flow chart of this step. In step 1031, the position the user starts to use the pen mouse to draw a drafting range is set as a maximum coordinate position and a minimum coordinate position. The maximum coordinate position and a minimum coordinate position are recorded in a memory. Next, a determination step 104 is performed to determine whether or not the drawing process is ended. For example, when the pen mouse leaves a sensor board, the drawing process is ended.

In step 1032, if the drawing process is not ended in step 104, the present coordinate position drawn by the user is compared with the maximum coordinate position and the minimum coordinate position. That is, if the drawing process is not ended, these coordinate positions drawn by the user are sequentially compared with the maximum coordinate position and the minimum coordinate position stored in the memory.

Next, step 1033 is to renew the maximum coordinate position and the minimum coordinate position stored in the memory. In an embodiment, when a coordinate position drawn by the user is less than the minimum coordinate position stored in the memory, this coordinate position replaces the minimum coordinate position and stores in the memory. On the other hand, when a coordinate position drawn by the user is larger than the maximum coordinate position stored in the memory, this coordinate position replaces the maximum coordinate position and stores in the memory. The step 1032 and step 1033 are repeatedly performed until the drawing process is ended. At this time, the two coordinate positions recorded in the memory are the maximum coordinate position and the minimum coordinate position of the drafting range defined by the user.

Next, step 104 is performed again to determine whether or not the drawing process is ended. If the drawing process is not ended in step 104, the step 1032 is performed again to compare the present coordinate position with the maximum coordinate position and the minimum coordinate position. On the other hand, if the drawing process is ended in step 104, step 105 is performed.

In step 105, a drafting range is generated based on the maximum coordinate position and the minimum coordinate position stored in the memory. The minimum coordinate position is the origin position. For example, the maximum coordinate position is (25, 32) and the minimum coordinate position is (12, 13). The drafting range is from coordinate position 12 to coordinate position 25 in the X-direction and from coordinate position 13 to coordinate position 23 in the Y-direction. The origin coordinate position is (12, 13).

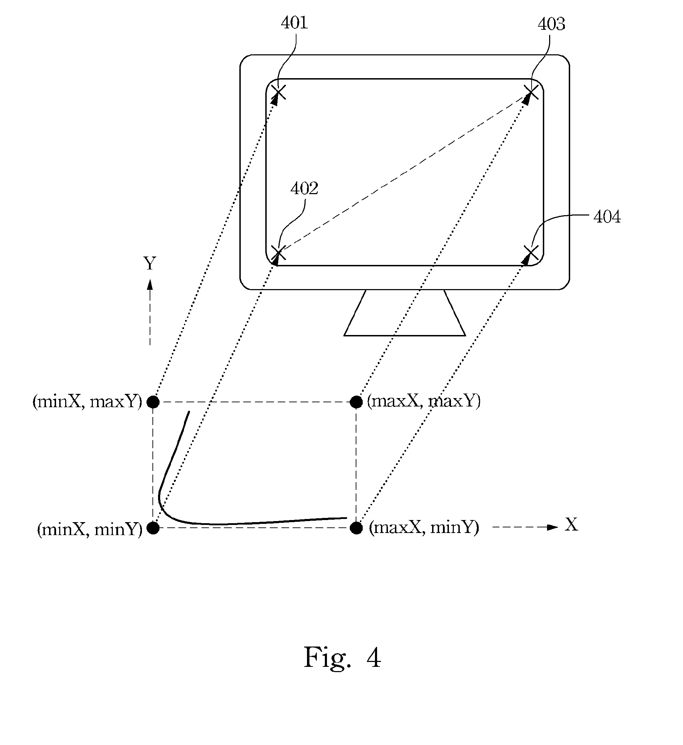

Next, in step 106, the drafting range is corresponded to a display range of a display as shown in the figure 4. In this embodiment, the maximum coordinate position is (max X, max Y) and the minimum coordinate position is (min X, min Y) based on the drafting range drew by the user. Accordingly, four coordinate position (min X, min Y), (max X, min Y), (min X, max Y) and (max X, max Y) define this rectangular drafting range. In this step, the four coordinate position (min X, min Y), (max X, min Y), (min X, max Y) and (max X, max Y) corresponds to four end points 402, 404, 401 and 403 in the display respectively.

In step 107, a ratio of the drafting range to the display range is defined. The writing character written in the drafting range is adjusted and displays in the display based on the ratio. Finally, in step 108, the flow 100 is ended.

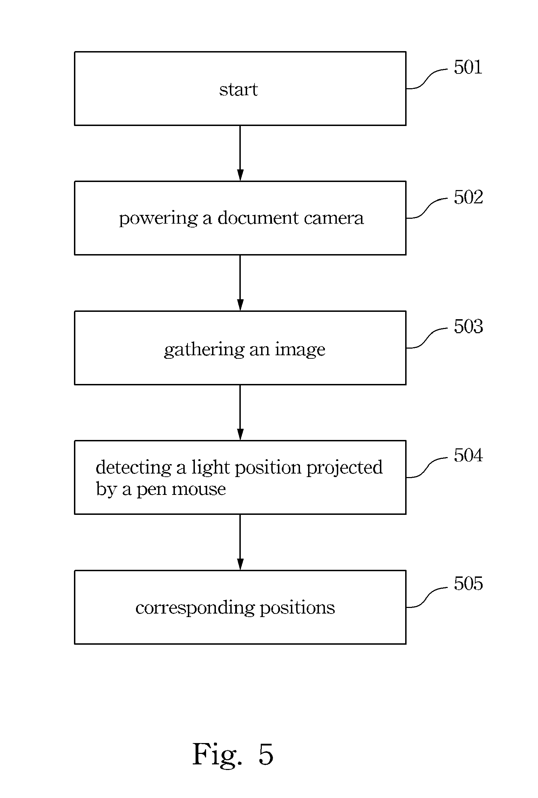

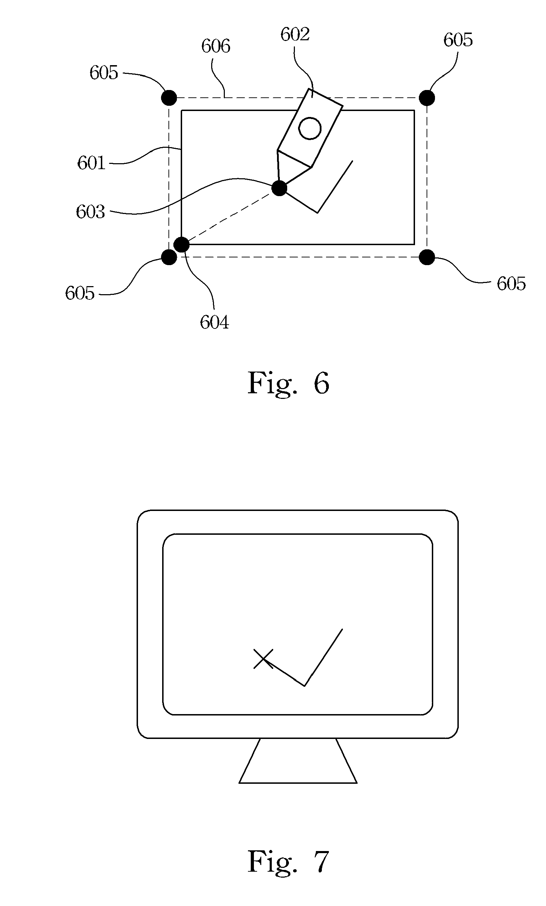

The present invention method is also applied to a document camera to cooperate with a pen mouse to define a drafting range and a drafting position as shown in the figure 5. Figure 6 is a schematic diagram of using a pen mouse to define the drafting range.

Refer to figure 5 and figure 6. In step 501, a user starts to write. In an embodiment, a user uses a pen mouse 602 to write in a defined drafting range. The drafting range is set in a range 606. For example, lasers 605 of the document camera define the range 606. The range 606 is a reference range for placing a document for projecting by the document camera. A user can adopt the method described in the steps 103 to 105 in flow 100 to define the drafting range 601.

Next, in step 502, the document camera is powered. In step 503, an image writing in the drafting range 601 is gathered. In an embodiment, when the document camera is powered, the document camera gathers this image. An image sensor device gathers this image and output image signal. CCD or CMOS constitutes the image sensor device.

In step 504, a position of light point projected by the pen mouse is detected. Finally, step 505 performs a corresponding positions process. In an embodiment, a distance between a light point 603 position projected by the pen mouse 602 and origin position 604 of the drafting range 601 is calculated to get a corresponding coordinate position of the light point 603. Moreover, a ratio defined by lasers 605 decides the position and size when a writing character in the drafting range 601 is displayed in a display as shown in figure 7.

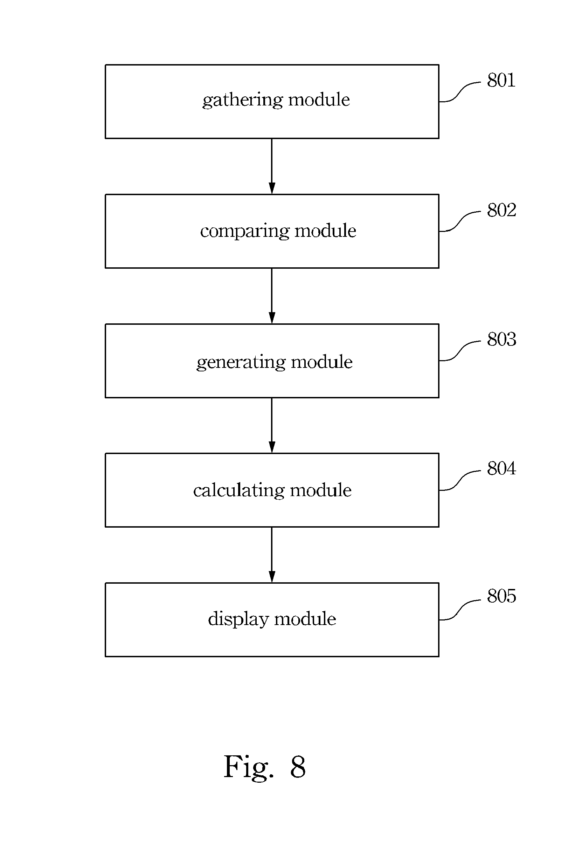

Figure 8 is an apparatus to define a drafting range and a drafting position according to the present invention. The apparatus includes a gathering module 801, a comparing module 802, a generating module 803, a calculating module 804 and a display module 805.

The gathering module 801 gathers coordinate positions of points that a user draws to define a drafting range. In an embodiment, a user can use a pen mouse to draw a range that the user wants to draft. A curve can be drawn by the user to define the range as shown in the figure 2A to 2D.

The comparing module 802 compares these coordinate positions gathered by the gathering module 801 to each other to get a maximum coordinate position and a minimum coordinate position. In an embodiment, the position of the user starts to use a pen mouse to draw a drafting range is set as a maximum coordinate position and a minimum coordinate position. The present coordinate position drawn by the user is compared with the maximum coordinate position and the minimum coordinate position to renew the maximum coordinate position and the minimum coordinate position until the drawing process is ended.

The generating module 803 generates a drafting range based on the maximum coordinate position and the minimum coordinate position. The minimum coordinate position is an origin of the drafting range.

The calculating module 804 corresponds the drafting range with a display range of a display to define a ratio of the drafting range to the display range.

The display module 805 adjusts the writing character and display the adjusted writing character in the display based on the ratio.

Accordingly, the drafting range is corresponded to the display range, then, the writing character is adjusted and displayed in a display based on a ratio of the drafting range to the display range. Therefore, an exactly drafting range and position can be displayed in the display.

While the preferred embodiment of the invention has been illustrated and described, it will be appreciated that various changes can be made therein without departing from the spirit and scope of the invention.

## Claims

1. A method to define a drafting range based on a curve drawn by a user, wherein a writing character is shown in a display based on the drafting range, the curve includes a plurality of points, wherein the method includes the following steps:
gathering coordinate positions of the points;
comparing these coordinate positions to each other to get a maximum coordinate position and a minimum coordinate position;
generating a drafting range based on the maximum coordinate position and the minimum coordinate position;
corresponding the drafting range to a display range of the display to define a ratio of the drafting range to the display range; and
adjusting the writing character to display in the display based on the ratio.

2. The method of claim 1, wherein each of the coordinate positions includes a first position in a first direction and a second position in a second direction, the maximum coordinate position has a maximum first position in the first direction and a maximum second position in the second direction among the points, and the minimum coordinate position has a minimum first position in the first direction and a minimum second position in the second direction among the points.

3. The method of claim 2, wherein the drafting range is from the minimum first position to the maximum first position in the first direction, and from the minimum second position to the maximum second position in the second direction.

4. The method of claim 3, wherein the drafting range is a rectangular drafting range and has four end points and the four points are corresponded to four end points of the display to decide the ratio.

5. The method of claim 1, wherein a pen mouse draws the curve.

6. The method of claim 5, wherein the step of generating a drafting range based on the maximum coordinate position and the minimum coordinate position, further comprises:
detecting a light position projected by the pen mouse;
calculating a distance between the light position and the minimum coordinate position; and
adjusting the distance and the writing character to display in the display based on the ratio.

7. The method of claim 6, wherein a document camera detects the light position and the ratio is got by lasers of the document camera.

8. An apparatus to define a drafting range based on a curve drawn by a user, wherein a writing character is shown in a display based on the drafting range, the curve includes a plurality of points, comprising:
a gathering module to gather coordinate positions of the points;
a comparing module to compare the coordinate positions to each other to get a maximum coordinate position and a minimum coordinate position;
a generating module to generate a drafting range based on the maximum coordinate position and the minimum coordinate position;
a calculating module to correspond the drafting range to a display range of the display to define a ratio of the drafting range to the display range; and
a display module to adjust the writing character to display the adjusted writing character in the display based on the ratio.

9. The apparatus of claim 8, wherein each of the coordinate positions includes a first position in a first direction and a second position in a second direction, the maximum coordinate position has a maximum first position in the first direction and a maximum second position in the second direction among the points, and the minimum coordinate position has a minimum first position in the first direction and a minimum second position in the second direction among the points.

10. The apparatus of claim 9, wherein the drafting range is from the minimum first position to the maximum first position in the first direction, and from the minimum second position to the maximum second position in the second direction.

11. The apparatus of claim 10, wherein the drafting range is a rectangular drafting range, the rectangular drafting range has four end points and the four points are corresponded with four end points of the display to decide the ratio.

12. The apparatus of claim 11, wherein a pen mouse draws the curve.

13. The apparatus of claim 12, wherein the apparatus further comprises a document camera to detect a light position projected by the pen mouse.

14. The apparatus of claim 13, wherein the calculating module further calculates a distance between the light position and the minimum coordinate position.

15. The apparatus of claim 14, wherein the display module further adjusts the distance and the writing character to display in the display based on a first ratio, wherein the first ratio is got by lasers of the document camera.
